# EUROPEAN PATENT SPECIFICATION

(11) **EP 0 830 402 B1**
(45) Date of publication and mention of the grant of the patent: **05.01.2000**
(21) Application number: 96918340.9
(22) Date of filing: 07.06.1996
(51) Int. Cl.: C08G 18/08, C08G 18/46, C09J 175/06

(54) **AQUEOUS NON-GELLING, ANIONIC POLYURETHANE DISPERSIONS AND PROCESS FOR THEIR MANUFACTURE**
WÄSSRIGE NICHTGELIERENDE, ANIONISCHE POLYURETHAN-DISPERSIONEN UND VERFAHREN ZU IHRER HERSTELLUNG
DISPERSIONS AQUEUSES NON GELIFIANTES DE POLYURETHANNES ANIONIQUES ET LEUR PROCEDE DE FABRICATION

(30) Priority: 07.06.1995 US 480780; 21.11.1995 US 561197
(43) Date of publication of application: 25.03.1998
(73) Proprietor: H.B. Fuller Licensing & Financing, Inc., St. Paul, Minnesota 55110-5132 (US)
(72) Inventor: DUAN, Youlu, Minneapolis, MN55454 (US); STAMMLER, Sonja, Marine on the St. Croix, MN 55047 (US); RHEIN, Scott, Forest Lake, MN 55025 (US); LINDQUIST, Lowell, St. Paul, MN 55110 (US); MO, Lincoln, Mississauga, Ontario L5E IGA9 (CA)
(74) Representative: Maiwald, Walter, Dr. Dipl.-Chem.
(86) International application number: US9609523
(87) International publication number: WO9640811

(56) References cited:
- EP-A- 0 259 679
- EP-A- 0 304 718
- EP-A- 0 368 172
- EP-A- 0 583 728
- WO-A-95/08583
- WO-A-96/07540

## Description

### Background of the Invention

### Field of the Invention

This invention relates new to aqueous polyurethane dispersion adhesive compositions which can be an one component or a two component for use in thermoforming. More particularly, this invention relates to aqueous polyurethane dispersion adhesive compositions comprising mixed sulfonate and carboxylate anionic polyurethane dispersions, and with or without compatible crosslinking agents. These new adhesive compositions exhibit good stability at low pH values, long pot life, high green strength, good water resistance and improved heat resistance.

### Description of the Prior Art

Aqueous dispersions of polyurethanes are known and are described in, for example, US 3,479,310; *Angew. Chem.*, **82**, 53, (1972); and *Angew. Makromol. Chem.*, **98**, (1981).

US 3,479,310 to Dieterich et al discloses dispersing in water a fully chain extended, NCO-free polyurethane having internal ionic salt groups.

For anionic aqueous polyurethane dispersions, the ionic salt groups are salts of carboxylic acid or sulfonic acid.

Aqueous polyurethanes having only internal carboxylate groups as anionic moieties are stable only at pH >7. Such polyurethane dispersions can form a two component adhesive composition with compatible crosslinkers, such as polyfunctional isocyanates, epoxies or aziridines.

Henning, et al., US 4,870,129, discloses use of the sodium salt of N-(2-aminoethyl)-2-aminoethane sulfonic acid (AAS salt) to prepare polyurethane dispersions. The aqueous polyurethane dispersions are reported to have exhibited good stability at low pH values (5-7), high green strength and medium heat resistance.

Usually, after blending the sulfonated polyurethane dispersions with a polyisocyanate crosslinker, such as the dispersible polyisocyanate in U.S. Pat. 4,663,377 to Hombach et al, their heat resistance will be improved.

Leung, US 4,762,880, discloses water-based thermoforming adhesives comprising aromatic polyurethanes, cross-linking agents and others. These kind of adhesive compositions will need high temperature to activate due to the aromatic polyurethane component.

US 4,870,129 to Henning et al discloses an adhesive consisting of an aqueous polyurethane containing chemically incorporated carboxylate or sulfonate groups. The adhesive of this reference showed low activation temperature but only medium heat resistance.

Duan et al in WO 95/08583 and WO 96/07540 disclose aqueous polyurethane dispersions based on sulfonated polyester polyols, which have an unusually high crystallization rate, while also exhibiting good stability at low pH values, high green strength, and medium and high heat resistances.

In the preparation of anionic polyurethane dispersions it is generally preferred to prepare a polyurethane prepolymer having a small residual free isocyanate content, disperse the prepolymer in water, and then add a plural functional relatively low molecular weight primary and/or secondary amine as a chain extender. This chain extension process is needed because a higher molecular weight polyurethane-urea having high heat resistance is obtained after extension. Chain extension, however presents some problems. The reaction of an amine with the free isocyanate of the prepolymer is a very rapid and vigorous reaction, therefore increasing the possibility of side reactions (creating a branching or network structure) and gelling.

It is known that chain extension can also be accomplished by permitting reaction of an isocyanate functional group on the polyurethane prepolymer with water via a mechanism which is believed to generate amine functional group on the prepolymer which promptly reacts with another isocyanate functional group of the prepolymer to give a self-extended polymer. However, carbon dioxide is given off in this reaction and the pH of the dispersion consequently drops during the extension reaction. For carboxylate anion dispersions, the pH drop can cause the polymer to come out of dispersion. For sulfonate dispersions, such as disclosed in the examples of GB 1,128,568, high amounts of solvent are used to accomplish dispersion (approximately 1/3 of the total dispersion weight), most of which is subsequently distilled off. A stable dispersion reportedly results. However the equipment needed to distill off and recover excess solvent is very expensive and not practical for producing polyurethane dispersion products with optimal properties for specific industrial applications.

In U.S. Pat. No. 5,173,526 (Air Products & Chemicals, Inc.), U.S. Pat. No. 4,644,030 (Witco Corporation) and EP 066275-A2 there are reportedly described hybrid dispersion products in which vinyl monomers are polymerized in the presence of a polyurethane dispersion. The polyurethane dispersions are not based on sulfonated polyurethane dispersions.

### Summary of the Invention

The present invention is directed to novel aqueous sulfonated polyurethane dispersions having low activation temperatures, and high heat resistance, even without addition of a crosslinker at the time of use, and to the process for preparing such dispersions. The aqueous polyurethane dispersion adhesive compositions of the invention have good compatibility with other water based polymers, such as other aqueous polyurethane dispersions either sulfonated or carboxylated polyurethane dispersions, vinyl acetate emulsions and acrylate emulsions, and also have good compatibility with thickening agents and pigments.

The compositions of the invention are aqueous dispersions of an anionic polyurethane, the polyurethane comprising the reaction product of an isocyanate terminated polyurethane prepolymer, and water free of primary or secondary amine. The polyurethane prepolymer is the reaction product of a polyol component and a diisocyanate component, the polyol component comprising:
a sulfonated polyester polyol, and
a hydroxy carboxylic acid of the formula:

   (HO)ₓR(COOH)_{y}

   wherein (R) represents a straight or branched, hydrocarbon radical containing 1 to 12 carbon atoms, and x and y represent values from 1 to 3,
and the diisocyanate component selected from the group consisting of aromatic diisocyanates, isophorone diisocyanate, hexamethylene diisocyanate and mixtures thereof. In a preferred embodiment of the invention the polyol component also includes a low molecular weight aliphatic diol having a molecular weight of from 60 to 400. Optionally, the polyurethane prepolymer can also comprise a non-sulfonated polyol.

The dispersions of the invention may be utilized with or without a crosslinker. In their preferred embodiments, even the uncrosslinked adhesives provide equivalent or better heat resistance than prior art dispersions to which a crosslinker has been added at the time of use, and better heat resistance than similar uncrosslinked polymer dispersions prepared using a diamine chain extender. These polymers are further characterized as having low heat activation temperatures in a range of from 50°C to 95°C, and they rapidly develop heat resistance greater than 110°C without external crosslinkers.

The present invention further comprises water-based sulfonated polyurethane/acrylic or water-based sulfonated polyurethane/vinyl polymers, especially such polymers produced in accordance with the foregoing description using water reaction for chain extension, wherein the polyurethane disclosed are synthesized in the presence of ethylenically unsaturated monomers (as defined in claims 32-39) to generate useful water-based blends of polyurethane/acrylic-or-vinyl polymers. These products reduce the use of volatile organic compounds (VOC) and generate polymer blends with enhanced interpenetrating polymer networks which ultimately improve the physical properties of the dried films as adhesives.

The invention also pertains to a method for preparing such dispersions in which the addition of isocyanate functional anionic polyurethane prepolymer to water free of primary or secondary amine is accomplished at a temperature of at least 60°C, and the reaction temperature is subsequently maintained at or above 60°C for sufficient time to complete the chain extension reaction with water. The inventive compositions are useful as adhesives for various substrates including paper, wood, metals, glass, cloth, foam, and synthetic polymers and can also be used in other applications including fiberglass sizing, membrane press, woodworking, automotive, film laminating, non-woven binders and in the manufacture of shoes (as defined in claim 40).

### Detailed Description of the Invention

The isocyanate terminated polyurethane prepolymer used in the dispersions of the invention are reaction products of a polyol nmixture and a polyisocyanate. The polyol mixture comprises a sulfonated polyester polyol, a hydroxy carboxylic acid and a low molecular weight diol, and optionally a non-sulfonated polyol.

The sulfonated polyester polyols used to form the isocyanate terminated polyurethane prepolymer may be any polyester polyol which incorporates sulfonate groups via sulfonate functional dicarboxylic acid residues and/or sulfonate functional diol residues. The sulfonate functional groups may be in acid or salt form. Suitable salt forms are alkali metal salts, or tertiary amine salts. Typically such sulfonate functional dicarboxylic acid residues and/or sulfonate functional diol residues are a minor portion of the diol and/diacid moieties of the polyester, preferably 1.0%-10.0% by weight of the polyester. The non-sulfonated diacids and diols used in forming the sulfonated polyesters may be aromatic or aliphatic. Examples of the non-sulfonated diacids include adipic, azelaic, succinic, suberic and phthalic acids. Examples of the non-sulfonated diols include ethylene glycol, condensates of ethylene glycol, *i.e*. diethylene glycol, triethylene glucol, tetraethylene glycol and various polyethylene glycols, butanediol, butenediol, propandiole, neopentylglycol, hexanediol, 1,4-cyclohexane dimethanol, 1,2-propylene glucol and 2-methyl-1,3 propanediol. Examples of the sulfonate diacids include sulfoisophthalic acid, 1,3-dihydroxybutane sulfonic acid and sulfosuccinic acid. Examples of the sulfonate diols include 1,4 dihydroxybutane sulfonic acid and succinaldebyde disodium bisulfite.

The preferred sulfonated polyester poyols are based on 5-sulfoisophthalic acid monosodium salt, 1,6-hexanadiol and adipic acid. Examples of preferred commercially available sulfonated polyester polyols are Rucoflex XS-5483-55 and Rucoflex XS-5536-60, made by Ruco Polymer Corporation. These sulfonated polyester polyols are based on 5-sulfoisophthalic acid monosodium salt (4 wt.% in XS-5483-55, and 6 wt.% in XS-5536-60), 1,6-hexanediol and adipic acid.

The sulfonated polyester polyols desirably will have a molecular weight in the range of 500 to 10,000 and a melting temperature in the range of 10 to 100°C. The preferred molecular weight range is 1,000 to 4,000 and the preferred melting temperature is between 30°C and 80°C, more preferably between 40°C and 60°C.

Molecular weights referred to herein are number average molecular weights.

The hydroxy carboxylic acids used to form the isocyanate terminated polyurethane prepolymer are compounds of the formula:

(HO)ₓR(COOH)_{y}

wherein R represents a straight or branched, hydrocarbon radical containing 1 to 12 carbon atoms, and x and y represent values from 1 to 3. Preferably, the hydroxy carboxylic acids are α,α-dimethylol alkanoic acids represented by the formula: 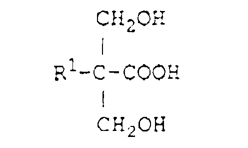 where R¹ denotes hydrogen or an alkyl group with up to 9 carbon atoms. Examples of such compounds are 2,2-dimethylolacetic acid, 2,2-dimethylolpropionic acid, 2,2-dimethylolbutyric acid and 2,2-dimethylolpentanic acid. The preferred dihydroxyalkanoic acid is 2,2-dimethylolpropionic acid (DMPA).

The low molecular weight diols used in forming the isocyanate terminated polyurethane prepolymer are aliphatic diols, particularly alkylene diols. Their molecular weight range is from 60 to 400. Preferably, the low molecular weight diols are C₂-C₈ alkylene diols and most preferably C₃-C₆ alkylene diols examples of the diols are ethylene glycol, 1,3-propylene glycol, 1,4-butanediol (1,4-BD) and 1,6-hexanediol.

The polyol component utilized to make the polyurethane dispersions of the invention may include, in addition to the sulfonated polyester polyol optionally also a non-sulfonated polymeric polyol, for instance a polyester polyol or a polyether polyol or a mixture of polyester and polyether polyols.

The diisocyanates which are used in forming the isocyanate terminated polyurethane prepolymer are aromatic diisocyanates, isophorone diisocyanate (IPDI), hexamethylenediisocyanate (HDI), and mixtures thereof. Examples of suitable aromatic diisocyanates are phenylenediisocyanate, totylenediisocyanate (TDI), biphenylenediisocyanate, naphthylenediiocyanate and diphenylmethanediisocyanate (MDI).

In the polyol component the polyols are suitably employed in the following relative weight ratios of sulfonated polyester polyol/hydroxy carboxylic acid/low molecular weightt diol/non-sulfonated polyol: 10-50/0.5-5/0.1-2/0-20, preferably: 20-40/1-3/0.5-1.5/0-10. In forming the polyurethane prepolymer the ratio of NCO groups in the diisocyanate component to OH groups in the polyol component is suitably 1.1-1.9:1, preferably 1.2-1.6:1.
The prepolymer suitably is reacted to provide a NCO level of 1-5% by weight.

The polyurethane prepolymer may be formed neat or in the presence of a solvent suitably by reaction at a temperature from room temperature to 100°C, typically at a temperature of 50-80°C. A catalyst, such as a tertiary amine or tin salt catalyst may be employed if desired. The prepolymer is desirably formed in the presence of a water compatible solvent such as 1-methyl-2-pyrrolidone (NMP), dipropylene glycol methyl ether acetate (DPMA), methyl ethyl ketone (MEK), or acetone. The solvent, however is employed at levels much less than reported in the prior art for anionic, water-extended polyurethane prepolymers. Suitably the solvent level will correspond to a level of 0-10% by weight of the dispersion, more preferably 0.5-7.5%, still more preferably 1-3%. If a still lower solvent level is desired after dispersion, the solvent may easily be reduced by simple distillation, generally with reduced pressure. However if the solvent content is high, as with prior art processes, the necessary solvent distillation requires very complicated and expensive equipment, and still does not eliminate all solvent.

After the prepolymer is formed, it is dispersed in water. To accomplish dispersion, the sulfonate groups, if not already in salt form, and at least a portion of the carboxylic acid groups of the prepolymer are neutralized with a tertiary amine. The tertiary amine may be added with the water, but more preferably neutralization is accomplished before the water is added, suitably by direct addition to the prepolymer/solvent mixture.

After addition of the tertiary amine, the acid number of the dispersion should be no more than 15, preferably less than 5 and more preferably the tertiary amine is in excess of the acid groups so that there is no free acid at the time of dispersion.

in the process of the invention, the selection of diisocyanate, the use of the dihydroxycarboxylic acid and the temperature of components when the dispersion is made and the free isocyanate of the prepolymer is partially hydrolyzed in water to accomplish self-addition and thereby increase molecular weight are very important. In the case of omission of the carboxylic acid, the resulting prepolymer, when added to water with the low solvent levels employed in the invention, yield unprocessable gels of the prepolymer/solvent/water mixture.

In the case of too low a temperature during dispersion and chain extension, a portion of the polymer may precipitate during the chain extension reaction. A temperature of at least 60°C, preferably at least 70°C, is recommended for a reaction time of 0.5-10 hours, preferably 1-3 hours, most preferably about 2 hours. During the chain extension reaction carbon dioxide is produced and the pH of the dispersion drops. For dispersions containing only carboxylate anionic groups this pH drop leads to precipitation of polymer. However in the formulations of the invention the dispersions are stable so long as the temperature is maintained at or above 60°C for a sufficient time. The minimum time is believed to be the time required to drive the water isocyanate reaction and self chain extension reaction to completion. While the chain extension reaction time is shortened as temperature is increased it is not recommended that the temperature increase above about 90°C as too rapid a reaction can lead to undesirable formation of foam due to carbon dioxide gas evolution. Once the chain extension reaction is complete, the dispersion is stable and may be cooled to ambient temperature without causing precipitation, gelation or foaming.

The compositions of the invention may be crosslinked by adding a crosslinker to the dispersion at, or shortly before, the time it is applied to a substrate and dried. Crosslinkers which may be used, include isocyanates, melamine resins, epoxies, oxazolines. In some cases these polyisocyanate crosslinkers may not be suitable for this purpose since the polymer has little or no terminal amine groups. However, crosslinking can also be accomplished through the carboxylate groups introduced into the sulfonated polyurethane polymer via the hydroxy carboxylic acid component of the polyol component. These carboxylate groups may be reacted with carboxylic acid reactive crosslinkers which are active at room temperature, such as polyfunctional aziridine compounds, zinc ammonium carbonate, zirconium carbonate or polyfunctional carbodiimide compounds. Typically crosslinkers are added at a level of 1-10% by weight.

In WO 96/07540 it was reported that the heat resistance of the aqueous diamine-extended polyurethane dispersions of that application was significantly improved by the employment of the low molecular weight diol in forming the polyurethane prepolymer. In fact the heat resistance of the polyurethane polymer was so greatly improved by the low molecular weight diol that one component adhesive compositions used without crosslinker, in preferred embodiments of the invention, gave better high temperature resistance than commercial prior art dispersion adhesives employing crosslinkers. Surprisingly, even better heat resistance is obtained with one-part compositions of the invention than are obtained for similar formulations extended with a diamine compound as disclosed in WO 96/07540.

The high heat resistance benefits are obtained with low activation temperature. In film bonding use, the dispersion adhesive, with or without crosslinker, is applied to a film web substrate and dried, after which it is heated and the second film web substrate applied. The temperature of heating, referred to in the art as the activation temperature, is selected to provide good tack so the adhesive bonds to the second web and to change the physical properties of the adhesive by increasing the physical or chemical crosslinks so that the adhesive after heating provides a higher heat resistance, and usually higher water and solvent resistance, than before heating. Higher temperatures are frequently required to accomplish a desired change in adhesive heat resistance properties than to merely assure good adhesive wetting. Unexpectedly, it has been found that the preferred aqueous polyurethane dispersion adhesives not only give high heat resistance, but also do so at low heat activation temperatures. Activation temperatures as low as 52°C (125°F) have been shown to effectively implement the heat resistance properties of the inventive formulations, even without crosslinker.

In accordance with the invention, the aqueous polyurethane dispersions of the invention also have small particle sizes and excellent stability over a large pH range (3-11).

The high green strength and high heat resistance at low activation temperature makes the one-component or two-component compositions of the invention particularly useful in automotive, aerospace, shoe material bonding, woodworking, bookbinding, fiberglass sizing and film laminating applications. For instance, a one-component composition substantially as in Example 1,2,3, and 10 below, may be used in automobiles, bonding polypropylene foam to polyvinyl chloride at activation temperature of about 102°C; in aerospace, bonding of DuPont Tedlar® PVF to phenolic composite at activation temperatures in the range of from room temperature to 99°C; in shoemaking, bonding leather to SBR (activation temperature 66-77°C), and bonding highly plasticized PVC to itself or other substrates (activation temperature 66-77°C); in woodworking, bonding PVC to medium density fiberboard (activation temperature 66°C); in bookbinding, bonding paper to paper using activation temperatures from room temperature to 93°C ; in house siding for bonding Tedlar® to PVC, wood, wood composite, recycled wood and/or paper products; and in laminating of films of polyethylene terephthalate to films of polypropylene, polyethylene or aluminum or other metal foils (activation temperatures of 52-66°C).

The formulations of the invention have good compatibility with other water based polymer dispersions even those having low pH (pH 4-7). This compatibility makes the formulations of the invention useful in blends with acrylic, epoxy and vinyl acetate or other vinyl polymer dispersions, as well as other polyurethane polymer dispersions. Blends with water based acrylic polymers can be used for shoe and fiberglass sizing applications. Blends with vinyl acetate or other vinyl polymer dispersions have use in automotive, woodworking, and bookbinding applications.

If even higher resistance is required, an added external crosslinking agent can be added. The resulting 2-component adhesive formulation can have heat resistance of greater than about 140°C, as measured by T-Peel.

The invention is further illustrated, by the following non-limiting examples in which all parts and percentages are by weight unless otherwise specified.

### EXAMPLES

### Heat resistance

Heat resistance reported for the polyurethane dispersion adhesives described in Examples 1-5 and 10-12 were obtained by drawing down the dispersion with or without a crosslinker on a 0.0254 cm (10 mil) clear PVC film (polyvinyl) chloride film from Laird Plastics) with a #28 Mylar rod to prime a 2.5 x 2.5 cm (1 x 1 inch) area of 2.5 cm wide strips of the PVC films. After the adhesive is dry to touch the primed PVC film is cut into 2.5 x 5 cm (1 x 2 inch) strips. The printed strip is heat sealed to another uncoated 2.5 x 5 cm PVC strip using a Sentinal Heat Sealer at 345 kPa (50 psi) nip pressure with a 30 second dwell time. The sealing temperatures (activation temperature) selected were as listed in the specific examples. The bonds were allowed to age 7 days and then the heat resistance temperature was measured.

A 100 g weight was attached to each PVC bond in a T-peel configuration and then placed in the Tenney oven. The T-peels had a 1 square inch bond area. The T-peels were subjected to a 25°C increase in temperature each hour until 127°C (260°F). The temperatures were recorded by the Tenney sensing unit upon bond failure.

### Green Strength

Green strengths as reported in Examples 10-12 were obtained from PVC to PVC laminates prepared as described. Peel strength was measured using an Intelet 500 instrument at 30.5 cm (12 inches) per minute. Green strength measurements were taken 15 minutes after heat sealing of the laminates.

### Bonding Strength

Bonding strengths as reported in Examples 10-12 were obtained as for the green strength except the bonds were aged for 7 days before taking the peel strength measurement.

### Abbreviations

The following abbreviations are used in the Examples:

| | |
|---|---|
| Rucoflex XS-5483-55 | a sulfonated polyester polyol based on 5-sulfoisophthalic acid monosodium salt, adipic acid and 1,6-hexanediol, OH number 49.0 |
| DMPA | dimethylolpropionic acid |
| 1,4-BD | 1,4-butanediol |
| IPDI | isophorone diisocyanate |
| HDI | hexamethylenediisocyanate |
| EDA | ethylenediamine |
| TEA | triethylamine |

### Examples 1-5

In Examples 1-5, the activation temperature was 66°C (150°F).

### Formulations:

| Examples | 1 | 2 | 3 | 4 (Comparative) | 5 (Comparative) |
|---|---|---|---|---|---|
| Rucoflex XS-5483-55 | 213.8 | 213.8 | 213.8 | 213.8 | 213.8 |
| DMPA | 10.05 | 10.05 | 10.05 | 10.05 | 10.05 |
| 1,4-BD | 11.25 | 11.25 | 11.25 | 11.25 | 11.25 |
| IPDI | 31.08 | 31.08 | 31.08 | 31.08 | 31.08 |
| HDI | 47.04 | 47.04 | 47.04 | 47.04 | 47.04 |
| TEA | 6.0 | 6.0 | 12.0 | 6.0 | 6.0 |
| EDA | 0 | 0 | 0 | 6.48 | 2.16 |
| Acetone | 70.0 | 28.7 | 18.1 | 70.0 | 70.0 |
| Water | 604.3 | 554.3 | 585.4 | 604.3 | 604.3 |

### Process for Examples 1-3:

The Rucoflex-XS-5483-55, DMPA and 1,4-BD were melted and mixed at 60-70°C. The IPDI, HDI and acetone were added, whereupon the temperature was maintained at about 70°C for 3 hours. At this temperature, the TEA was added and stirred for 10-15 minutes. The prepolymer was dispersed by adding the water. The prepolymer dispersion was stirred for another 2 hours at 65°C. A finely divided dispersion was obtained.

### Process for Examples 4-5 (Comparative Examples):

The Rucoflex XS-5483-55, DMPA and 1,4-BD were melted and mixed at 60-70°C. The IPDI, HDI and acetone were added, whereupon the temperature was maintained at about 70°C for 3 hours. At this temperature, the TEA was added and stirred for 10-15 minutes. The prepolymer was dispersed by adding 554.3 of water. Sixty minutes later, the EDA with 50.0 g of water was added. A finely divided dispersion was obtained.

### Properties for Examples 1-5:

| Examples | 1 | 2 | 3 | 4 | 5 |
|---|---|---|---|---|---|
| Solids % | 32.1 | 35.4 | 35.0 | 33.0 | 34.0 |
| pH | 7.1 | 7.2 | 7.3 | 10.0 | 7.8 |
| Viscosity (cps) | 125 | 45 | 15 | 450 | 350 |
| Particle Size (mm) | 150 | 145 | 180 | 170 | 160 |
| Heat resistance (t-peel, pvc/pvc) | No failure until 260°F (127°C) | No failure until 260°F (127°C) | No failure until 260°F (127°C) | 210°F (99°C) | 235°F (113°C) |

Examples 1 and comparative Examples 4 and 5 have the same composition except that in Example 1 there is no EDA (diamine chain extender), and in Examples 4 and 5 the amount of EDA varies. The table shows that the heat resistance was increased when the amount of the EDA was decreased. The aqueous polyurethane prepolymer dispersion without chain extender exhibited the highest heat resistance. This is a result not predicted from the prior art.

### Example 6 (Comparative Example)

### Starting Materials:

| | |
|---|---|
| Rucoflex XS-5483-55 | 213.8 |
| 1.4-BD | 6.75 |
| IPDI | 18.13 |
| HDI | 27.44 |
| Acetone | 15.2 |
| Water | 479.0 |

### Process:

The Rucoflex XS-5483-55 and 1.4-BD were mixed at 45-50°C. At this temperature, the IPDI and the HDI were added. The temperature was increased to 70°C and maintained for 2 hours, and then was increased to 80°C in 0.5 hour. At this temperature, the prepolymer was dispersed by adding the water which was preheated to 80°C, and immediately the mixture gelled. This formulation contained no hard segment anionic groups.

### Examples 7-9

Starting Materials:

| Examples | 7 (Comparative) | 8 | 9 |
|---|---|---|---|
| Rucoflex XS-5483-55 | 213.8 | 213.8 | 213.8 |
| DMPA | 10.05 | 10.05 | 10.05 |
| 1,4-BD | 11.25 | 11.25 | 11.25 |
| IPDI | 31.08 | 31.08 | 31.08 |
| HDI | 47.04 | 47.04 | 47.04 |
| TEA | 6.0 | 6.0 | 6.0 |
| Acetone | 18.1 | 18.01 | 18.1 |
| Water | 604.3 | 604.3 | 604.3 |
| | | | |
| Dispersion temperature (°C)* | 50 | 65 | 80 |
| Precipitation amount | 10% | 5% | None |

| | | | |
|---|---|---|---|
| * Dispersion temperature: the prepolymer and the water were brought to the specified temperature before mixing and maintained at that temperature for a period of 2 hours. | | | |

Examples 7-9 illustrate the importance of maintaining an adequate elevated temperature while the isocyanate functional prepolymer is reacting with the water.

### Example 10

### Starting Materials:

| | |
|---|---|
| Rucoflex XS-5483-55 | 213.8 |
| DMPA | 10.05 |
| 1,4-BD | 6.75 |
| IPDI | 25.9 |
| HDI | 39.2 |
| TEA | 8.0 |
| Acetone | 17.4 |
| Water | 546.7 |

### Process:

The Rucoflex XS-5483, DMPA and 1,4-BD were melted and mixed at 60-70°C. The IPDI, HDI and acetone were added, whereupon the temperature was maintained at about 70° for 2 hours and then was increased to 80°C in 0.5 hour. At this temperature, the TEA was added and stirred for 10 minutes. The prepolymer was dispersed by adding the water which was preheated to 80°C. The prepolymer dispersion was stirred for another 2 hours at 60°C.

A finely divided dispersion having a solids content of 35.0%, viscosity of 200 cps, particle size of 150 nm and a pH of 7.2 was obtained.

### Properties:

| | | | | |
|---|---|---|---|---|
| Activation Temperature (°C) | 52 | 66 | 79 | 93 |
| Green strength (T-Peel, kg/cm, PVC/PVC) | 2.4 | 2.8 | 3.9 | 5.5 |
| Bonding strength (T-Peel, kg/cm, PVC/PVC) | SF | SF | SF | SF |
| Heat resistance temp. (°C) (T-Peel, 100 g load, PVC/PVC) | >127 | >127 | >127 | >127 |

| | | | | |
|---|---|---|---|---|
| SF: Substrate failure | | | | |

### Examples 11 & 12

### Starting Materials:

| Examples | 11 | 12 (Comparative) |
|---|---|---|
| Rucoflex XS-5483-55 | 213.8 | 213.8 |
| DMPA | 10.05 | 10.05 |
| IPDI | 18.1 | 18.1 |
| HDI | 27.4 | 27.4 |
| TEA | 8.0 | 8.0 |
| EDA | 0.00 | 3.15 |
| Acetone | 15.9 | 15.9 |
| Water | 699.2 | 699.2 |

### Process for Example 11

The Rucoflex-XS-5483-55 and DMPA were melted and mixed at 60-70°C. The IPDI, HDI and acetone were added, whereupon the temperature was maintained at about 70°C for 2 hours and then was increased to 80°C for 0.5 hour. At this temperature, the TEA was added and stirred for 10 minutes. The prepolymer was dispersed by adding the water which was preheated to 80°C. The prepolymer dispersion was stirred for another 2 hours at 60°C.

A finely divided dispersion having a solids content of 29.8%, viscosity of 1500 mPa·s particle size of 180 nm and a pH of 7.1 was obtained.

### Process for Examples 12 (Comparative Example):

The prepolymer was prepared and neutralized with TEA as in Example 11. The prepolymer was dispersed by adding the water (minus 50 g) which was preheated to 80°C, 30 Minutes later, the EDA in 50 g water was added.

A finely divided dispersion having a solids content of 29.8%, viscosity of 1200 mPa·s particle size of 190 nm and a pH of 8.5 was obtained.

### Properties for Examples 11 and 12:

| | | | | |
|---|---|---|---|---|
| Activation Temperature (°C) | 52 | 66 | 79 | 93 |
| Green strength (T-Peel, kg/cm, PVC/PVC) | | | | |
| Example 11 | 1.7 | SF | SF | SF |
| Example 12 | 2.3 | SF | SF | SF |
| Bonding strength (T-Peel, kg/cm, PVC/PVC) | | | | |
| Example 11 | 4.8 | 8.8 | 11.6 | 11.6 |
| Example 12 | 5.2 | 9.4 | 11.6 | 12.3 |
| Heat resistance temp. (°C) (T- | | | | |
| Peel, 100 g load, PVC/PVC) | | | | |
| Example 11 | >127 | >127 | >127 | >127 |
| Example 12 | 100 | 100 | 101 | 100 |

| | | | | |
|---|---|---|---|---|
| SF: Substrate failure | | | | |

### Example 13

This example describes an adhesive formulation useful in bonding vinyl to polyolefin foam for the automotive industry.

32,88 grams Airflex 426 which is a vinyl acetate-ethylene copolymer dispersion from Air Products & Chemicals was adjusted to a pH of 6.6 using 0.16 grams ammonia. The material was blended with 56.76 grams of the polymer dispersion product described in Example 1, thickened with 2.2 grams Alcogum 296W, and then mixed with 2.5 grams Desmodur DA which is a water dispersible polyfunctional isocyanate from Bayer Corporation. The adhesive mixture was applied on a 5.5 x 6.0 in. (138 mm x 152 mm) piece of corona treated polypropylene foam using a #60 Meyer rod and then dried in a oven at 100°C for approximately 3-minutes. The adhesive-coated foam was mated with a 5.5 x 6.0 inch (138 mm x 152 mm) piece of unsupported vinyl, supplied by Canadian General Tower and O'Sullivan, then compressed using a Fred Carver Press using a top plate temperature of approximately 105°C for 60-seconds. The laminates were aged, at ambient room temperature, for 3-days then cut into 2.54 x 2,54 cm. strips and tested for creep heat resistance. In a peel mode, a 450 gram weight was attached to one end of the sample and placed in a 100°C oven for 1-hour and evaluated for creep. The adhesive formulation showed no sign of creep under the conditions described. Furthermore, after conditioning for 66-hours, the material resisted creep at 140°C, thereby showing the utility of the invention.

### Example 14

This example describes an adhesive composition employing a sulfonated polyurethane/acrylic polymer which is useful in the manufacture of shoes.

To a reaction flask was charged 213.8 grams (0.21 hydroxyl equivalents) of molten Rucoflex XS-5483-55 which is a sulfonated polyester polyol from Ruco Corporation, 10.05 grams (0.15 hydroxyl equivalents) dimethylolpropionic acid, 6.75 grams (0.15 hydroxyl equivalents) 1,4-butanediol, 37.97 grams methyl methacrylate and 37.97 grams butyl acrylate. The mixture was heated to 55°C then charged with 25.9 grams (0.23 isocyanate equivalents) isophorone diisocyanate and 39.2 grams (0.46 isocyanate equivalents) 1,6-diisocyantohexane. The mixture was heated at 70°C for approximately 3 hours. The isocyanate terminated sulfonated polyurethane prepolymer/monomer mixture was then charged with 8.0 grams (0.8 moles) triethylamine and stirred for 10 minutes. The prepolymer was dispersed in 554.5 grams deionized water. To the dispersion was charged, over a 10 minute period, a solution containing 0.20 grams ammonium peroxydisulfate and 20 grams deionized water. Free radical emulsion polymerization was completed by heating to 80°C for approximately 3 hours. The aqueous and dried polymer properties are described below:
pH = 7.7
Viscosity = 900 mPa.s
Effective diameter = 228 nm
Mean diameter = 494 nm

### Adhesion testing:

The wet sample was drawn down on an untreated, pressed and polished PVC sheet using a number 40 Meyer rod and dried 24 hours at ambient room temperature. A second PVC sheet was placed over the dried film and 2.54 cm x 15.24 cm strips were cut. The individual strips were heat activated, using variable temperatures, on a Sentinel® heat sealer at 3.515 kilograms per square centimeter for 30 seconds. After 24 and 168 hours aging, at ambient room temperature, the strips were tested on a Intellect® 500 for 180° peel values. The results are provided below:

| | | | | |
|---|---|---|---|---|
| Aging | 51.6°C | 65.5°C | 79.4°C | 93.3°C |
| 24 hours | 2.1 kg/cm | 3.0 Kg/cm | 4.4 Kg/cm | 5.3 Kg/cm |
| 168 hours | 3.2 Kg/cm | SF | SF | SF |

| | | | | |
|---|---|---|---|---|
| SF = Substrate Failure | | | | |

The 180° peel adhesion failure temperature was tested using the following procedure:

The wet formulation was drawn down on untreated, pressed, and polished polyvinyl chloride (PVC) sheets with a #40 Meyer rod and dried twenty four hours at ambient room temperature. A second PVC sheet was placed over the dried films and 2.54 x 15.24 centimeter strips were cut. The individual strips were heat activated, using variable temperatures, on a Sentinel heat sealer at 3.515 kilograms per square centimeter for 30 seconds. After 7 days of aging, at ambient room temperature, the strips were placed in a Tenny® oven using 0.1 kilogram weights and subjected to a 25°C increase each hour until bond failure. Bond failure temperatures were recorded up to 126°C by the Tenny® oven sensing unit. The results are provided below.

| | | | | |
|---|---|---|---|---|
| Heat activation Temperature | 51.6°C | 65.5°C | 79.4°C | 93.3°C |
| Failure Temperature | 58.7°C | >126°C | >126°C | >126°C |

## Claims

1. An aqueous dispersion of an anionic polyurethane, the polyurethane comprising the reaction product of an isocyanate terminated polyurethane prepolymer, and water free of primary or secondary amine, the polyurethane prepolymer comprising the reaction product of a polyol component and a diisocyanate component, the polyol component comprising:
a sulfonated polyester polyol,
a hydroxy carboxylic acid of the formula:
(HO)ₓR(COOH)_{y}
wherein (R) represents a straight or branched, hydrocarbon radical containing 1 to 12 carbon atoms, and x and y represent values from 1 to 3, and as optional components
a low molecular weight aliphatic diol having a molecular weight from
60 to 400 and
a non-sulfonated polymeric polyol,
and the diisocyanate component selected from the group consisting of aromatic diisocyanates, isophorone diisocyanate, hexamethylene diisocyanate and mixtures thereof.

2. A dispersion as in claim 1 wherein the low molecular weight aliphatic diol is present and is a C₂-C₈ alkylene diol.

3. A dispersion as in claim 2 wherein the low molecular weight aliphatic diol is ethylene glycol, 1,3-propylene glycol, 1,4-butanediol or 1,6-hexanediol.

4. A dispersion as in Claim 1 wherein the sulfonated polyester polyol is a hydroxy terminated polyester formed of residues from at least one carboxylic diacid, at least one diol and at least one sulfonate diacid or sulfonate diol.

5. A dispersion as in Claim 4 wherein the carboxylic diacid residue of the sulfonated polyester polyol comprises the residue of a diacid selected from the group consisting of adipic, azelaic, succinic, suberic and phthalic acids.

6. A dispersion as in Claim 4 wherein the diol residue of the sulfonated polyester polyol comprises the residue of a diol selected from the group consisting of ethylene glycol, condensates of ethylene glycol, butanediol, butenediol, propanediol, neopentyl glycol, hexanediol, 1,4-cyclohexane dimethanol, 1,2-propylene glycol and 2-methyl-1,3-propanediol.

7. A dispersion as in Claim 4 wherein the sulfonate diacid or sulfonate diol residue comprises the residue of at least one member of the group consisting of sulfoisophthalic acid, sulfosuccinic acid, 1,4-dihydroxybutane sulfonic acid and succinaldehyde disodium bisulfite.

8. A dispersion as in claim 1 wherein the sulfonated polyester polyol is based on 5-sulfoisophthalic acid monosodium salt, 1,6-hexanediol and adipic acid.

9. A dispersion as in Claim 1 wherein the sulfonated polyester polyol has a number average molecular weight in the range of 500 to 10,000 and a melting temperature in the range of 10 to 100°C.

10. A dispersion as in Claim 9 wherein the number average molecular weight range is 1,000 to 4,000 and the melting temperature is 40 to 60°C.

11. A dispersion as in claim 1 wherein the hydroxy carboxylic acid is a α,α-dimethylol alkanoic acid represented by the formula: 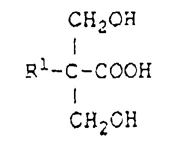 where R¹ denotes hydrogen or an alkyl group with up to 9 carbon atoms.

12. A dispersion as in claim 11 wherein the α,α-dimethylol alkanoic acid is selected from the group consisting of 2,2-dimethylolacetic acid, 2,2-dimethylolpropionic acid, 2,2-dimethylolbutyric acid, 2,2-dimethylolpentanic acid and mixtures thereof.

13. A dispersion as in claim 12 wherein the α,α-dimethylol alkanoic acid is 2,2-dimethylolpropionic acid.

14. A dispersion as in claim 1 wherein the polyol component includes said non-sulfonated polymeric polyol, said non-sulfonated polymeric polyol being selected from the group consisting of non-sulfonated polyester polyols, non-sulfonated polyether polyols and mixtures thereof.

15. A dispersion as in claim 1 wherein the polyols in said polyol component are employed in the following relative weight ratios of sulfonated polyester polyol/hydroxy carboxylic acid/low molecular weight diol/non-sulfonated polyol: 10-50/0.5-5/0.1-2/0-20.

16. A dispersion as in claim 15 wherein the polyols in said polyol component are employed in the following relative weight ratios of sulfonated polyester polyol/hydroxy carboxylic acid/low molecular weight diol/non-sulfonated polyol: 20-40/1-3/0.5-1.5/0-10.

17. A dispersion as in claim 1 wherein the polyurethane prepolymer is the product of a reaction in which said polyol component and diisocyanate component are reacted at a ratio of NCO groups to OH groups of 1.1-1.9:1.

18. A dispersion as in claim 17 wherein the polyurethane prepolymer is the product of a reaction in which said polyol component and diisocyanate component are reacted at a ratio of NCO groups to OH groups of 1.2-1.6:1.

19. An adhesive formulation prepared by blending a dispersion as in claim 1 with an acid reactive crosslinking agent.

20. An adhesive formulation as in claim 19 wherein the crosslinking agent is selected from the group consisting of polyfunctional aziridines, zinc ammonium carbonate and zirconium carbonate.

21. An adhesive formulation prepared by blending a dispersion as in claim 1 with a polyisocyanate crosslinking agent.

22. A bonded assembly of a pair of substrates, the assembly bonded with an adhesive comprising a dried dispersion of claim 1.

23. A bonded assembly as in claim 22 wherein, the substrate pairs include a member made of a material selected from the group consisting of polypropylene, polyvinyl chloride, phenolic composite, leather, styrene-butadiene rubber, fiberboard, paper, polyvinyl fluoride, wood, wood composite, recycled wood, polyethylene terephthalate, polyethylene, and metal.

24. A bonded assembly as in claim 22 wherein said adhesive consists essentially of said polyurethane.

25. A bonded assembly as in claim 22 wherein said adhesive further comprises at least one of an acrylic, an epoxy, a vinyl, or a second polyurethane polymer.

26. A bonded assembly as in claim 22 wherein said adhesive further comprises a crosslinker.

27. A bonded assembly as in claim 22 wherein said substrate pair is selected from the group consisting of polypropylene foam /polyvinyl chloride; polyvinyl fluoride/phenolic composite; leather/styrene-butadiene rubber; PVC/fiberboard; paper/paper; polyvinyl fluoride/polyvinyl chloride; polyvinyl fluoride/wood; polyvinyl fluoride/wood composite; polyvinyl fluoride/recycled wood; polyvinyl fluoride/paper products; polyethylene terephthalate/polypropylene; polyethylene terephthalate/polyethylene; polyethylene terephthalate/metal and plasticized polyvinyl chloride/plasticized polyvinyl chloride.

28. An adhesive formulation prepared by blending a dispersion as in claim 1 with at least one of an acrylic, an epoxy, a vinyl, or a second polyurethane polymer.

29. A method of forming an aqueous dispersion of an anionic polyurethane, the polyurethane comprising the reaction product of an isocyanate terminated polyurethane prepolymer, and water, the method comprising:
preparing an isocyanate functional polyurethane prepolymer, the polyurethane prepolymer having a free isocyanate content of 1-5% by weight and comprising the reaction product of a polyol component and a diisocyanate component, the polyol component comprising:
a sulfonated polyester polyol, and
a hydroxy carboxylic acid of the formula:
(HO)ₓR(COOH)_{y}
wherein (R) represents a straight or branched, hydrocarbon radical containing 1 to 12 carbon atoms, and x and y represent values from 1 to 3,
and the diisocyanate component selected from the group consisting of aromatic diisocyanates, isophorone diisocyanate, hexamethylene diisocyanate and mixtures thereof;
dispersing the prepolymer in an aqueous dispersing medium free of primary or secondary amine at a temperature of at least 60°C for a time sufficient to allow substantially all isocyanate groups to be reacted in a reaction in which the prepolymer is self-extended by reaction with water.

30. The method of claim 29 in which the polyol component further comprises a low molecular weight aliphatic diol having a molecular wright of from 60 to 400.

31. The method of claim 29 in which the polyol component further comprises a non-sulfonated polymeric polyol.

32. A water-based sulfonated polyurethane adhesive comprising the aqueous dispersion of an anionic polyurethane polymer of claim 1 formed in the presence of at least one ethylenically, unsaturated monomer.

33. A composition as in claim 32 wherein said ethylenically unsaturated monomer is selected from the group consisting of methyl methacrylate, butyl acrylate and mixtures thereof.

34. A composition as in claim 33 wherein said ethylenically unsaturated monomer is free radically polymerized after formation of said sulfonated polyurethane to form a water-based sulfonated polyurethane/acrylic interpenetrating network.

35. A composition as in claim 34 wherein said composition is characterized as having a dried film heat activation temperature in a range from 50°C to 95°C and heat resistant bonds of greater than 110°C.

36. A composition as in claim 33 further comprising at least one water dispersible polyfunctional crosslinking agent.

37. A composition as in claim 36 wherein said crosslinking agent is selected from the group consisting of isocyanates, aziridines, melamine resins, epoxies, oxazolines, carbodiimides, zinc ammonium carbonate and zirconium carbonate.

38. A composition as in claim 37 wherein said crosslinking agent is present in the composition in an amount from 1 part to 10 parts by weight, based on 100 parts of said composition.

39. A composition as described in claim 33 further comprising at least one water dispersible polymer or copolymer selected from the group consisting of acrylics, epoxy, vinyl acetates and mixtures thereof.

40. An article of footwear having an adhesive, coating or primer layer on at least one portion thereof, said layer comprising a polyurethane polymer, said polyurethane polymer being a reaction product of
a) at least one polyisocyanate;
b) at least one alkylene diol having a molecular weight range from 60 to 400;
c) at least one sulfonated polyester polyol wherein the sulfo groups are present as alkali metal salts;
d) at least on dihydroxy carboxylic acid, or a salt thereof selected from the group consisting of alkali metal salts, organic tertiary amine salts and mixtures thereof; and
e) water free of primary or secondary amine.

## Patentansprüche

1. Wäßrige Dispersion eines anionischen Polyurethans, wobei das Polyurethan das Umsetzungsprodukt eines Isocyanat-terminierten Polyurethanprepolymers und von Wasser umfaßt, welches frei von primärem oder sekundärem Amin ist, und das Polyurethanprepolymer das Umsetzungsprodukt einer Polyolkomponente und einer Diisocyanatkomponente umfaßt, wobei die Polyolkomponente umfaßt:
ein sulfoniertes Polyesterpolyol,
eine Hydroxycarbonsäure der Formel:
(HO)ₓR(COOH)_{y}
wobei (R) für ein geradkettiges oder verzweigtes Kohlenwasserstoffradikal mit 1 bis 12 Kohlenstoffatomen steht, und x und y für Werte von 1 bis 3 stehen, und als optionale Komponenten
ein niedrigmolekulargewichtiges aliphatisches Diol mit einem Molekulargewicht von
60 bis 400 und
ein nicht-sulfoniertes polymeres Polyol,
und die Diisocyanatkomponente aus der Gruppe bestehend aus aromatischen Diisocyanaten, Isophoron-Diisocyanat, Hexamethylendiisocyanat und Mischungen davon ausgewählt ist.

2. Dispersion nach Anspruch 1, wobei der aliphatische Diol niedrigen Molekulargewichts vorhanden ist, und ein C₂ bis C₈-Alkylendiol ist.

3. Dispersion nach Anspruch 2, wobei der aliphatische Diol niedrigen Molekulargewichts Ethylenglykol, 1,3-Propylenglykol, 1,4-Butandiol oder 1,6-Hexandiol ist.

4. Dispersion nach Anspruch 1, wobei das sulfonierte Polyesterpolyol ein Hydroxy-terminierter Polyester ist, der aus den Resten mindestens einer Dicarbonsäure, mindestens eines Diols und mindestens einer sulfonfierten Disäure oder eines sulfonierten Diols gebildet ist.

5. Dispersion nach Anspruch 4, wobei der Dicarbonsäurerest des sulfonierten Polyesterpolyols den Rest einer Disäure umfaßt, welche aus der Gruppe bestehend aus Adipin-, Azelain-, Bemstein-, Kork- und Phthalsäure ausgewählt ist.

6. Dispersion nach Anspruch 4, wobei der Diolrest des sulfonierten Polyesterpolyols den Rest eines Diols umfaßt, der aus der Gruppe bestehend aus Ethylenglykol, Kondensaten von Ethylenglykol, Butandiol, Butendiol, Propandiol, Neopentylglykol, Hexandiol, 1,4-Cyclohexandimethanol, 1,2-Propylenglykol und 2-Methyl-1,3-propandiol ausgewählt ist.

7. Dispersion nach Anspruch 4, wobei der sulfonierte Disäurerest oder der sulfonierte Diolrest den Rest zumindestens eines Bestandteils aus der Gruppe bestehend aus Sulfoisophthalsäure, Sulfobernsteinsäure, 1,4-Dihydroxybutansul fonsäure und Succinaldehyd-Dinatriumbisulfit (succinaldehyde disodium bisulfite) umfaßt.

8. Dispersion nach Anspruch 1, wobei das sulfonierte Polyesterpolyol auf 5-Sulfoisophthalsäure-Mononatriumsalz, 1,6-Hexandiol und Adipinsäure basiert.

9. Dispersion nach Anspruch 1, wobei das sulfonierte Polyesterpolyol ein Zahlengewichtsmittel-Molekulargewicht im Bereich von 500 bis 10.000 und Schmelztemperatur im Bereich von 10°C bis 100°C aufweist.

10. Dispersion nach Anspruch 9, wobei der Zahlengewichtsmittel-Molekulargewichtsbereich von 1000 bis 4000 und die Schmelztemperatur bei 40°C bis 60°C liegt.

11. Dispersion nach Anspruch 1, wobei die Hydroxycarbonsäure eine α,α-Dimethylolalkansäure gemäß folgender Formel ist: 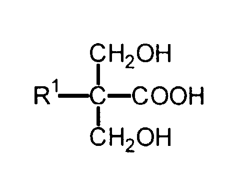 worin R¹ für Wasserstoff oder eine Alkylgruppe mit bis zu 9 Kohlenstoffatomen steht.

12. Dispersion nach Anspruch 11, wobei die α,α-Dimethylolalkansäure aus der Gruppe bestehend aus 2,2-Dimethylolessigsäure, 2,2-Dimethylolpropionsäure, 2,2-Dimethylolbuttersäure, 2,2-Dimethylolpentansäure und Mischungen davon ausgewählt ist.

13. Dispersion nach Anspruch 12, wobei die α,α-Dimethylolalkansäure 2,2-Dimethylolpropionsäure ist.

14. Dispersion nach Anspruch 1, wobei die Polyolkomponente das nicht-sulfonierte polymere Polyol umfaßt, und das nicht-sulfonierte polymere Polyol aus der Gruppe bestehend aus nicht-sulfonierten Polyesterpolyolen, nicht-sulfonierten Polyetherpolyolen und Mischungen davon ausgewählt ist.

15. Dispersion nach Anspruch 1, wobei die Polyole in der Polyolkomponente in den folgenden relativen Gewichtsverhältnissen von sulfoniertem Polyesterpolyol/Hydroxycarbonsäure/Diol niedrigen Molekulargewichts/nicht-sulfoniertem Polyol eingesetzt werden: 10-50/0.5-5/0.1-2/0-20.

16. Dispersion nach Anspruch 15, wobei die Polyole der Polyolkomponente in den folgenden relativen Gewichtsverhältnissen von sulfoniertem Polyesterpolyol/Hydroxycarbonsäure/Diol niedrigen Molekulargewichts/nicht-sulfoniertem Polyol eingesetzt werden: 20-40/1-3/0,5-1,5/0-10.

17. Dispersion nach Anspruch 1, wobei das Polyurethanprepolymer das Produkt einer Umsetzung ist, in der die Polyolkomponente und die Diisocyanatkomponente in einem Verhältnis der NCO-Gruppen zu den OH-Gruppen von 1,1-1,9;1 zur Reaktion gebracht werden.

18. Dispersion nach Anspruch 17, wobei das Polyurethanprepolymer das Produkt einer Umsetzung ist, in der die Polyolkomponente und die Diisocyanatkomponente in einem Verhältnis der NCO-Gruppen zu den OH-Gruppen von 1,2-1,6;1 zur Reaktion gebracht werden.

19. Klebstofformulierung hergestellt durch Vermischen einer Dispersion nach Anspruch 1 mit einem säurereaktiven Vernetzungsmittel.

20. Klebstofformulierung nach Anspruch 19, wobei das Vernetzungsmittel aus der Gruppe bestehend aus polyfunktionalen Aziridinen, Zinkammoniumcarbonat und Zirkoniumcarbonat ausgewählt ist.

21. Klebstofformulierung hergestellt durch Vermischen einer Dispersion nach Anspruch 1 mit einem Polyisocyanat-Vemetzer.

22. Verbundene Baugruppe aus einem Paar von Substraten, wobei die Baugruppe mit einem Klebstoff verbunden ist. der eine getrocknete Dispersion nach Anspruch 1 umfaßt.

23. Verbundene Baugruppe nach Anspruch 22, wobei die Substratpaare einen Bestandteil umfassen. das aus einem Material gefertigt ist, das aus der Gruppe bestehend aus Polypropylen, Polyvinylchlorid. Phenolverbundstoff, Leder. Styrolbutadienkautschuk, Faserplatte, Papier, Polyvinylfluorid, Holz, Holzverbundstoff, wiederverwertetes Holz, Polyethylenterephthalat, Polyethylen und Metall ausgewählt ist.

24. Verbundene Baugruppe nach Anspruch 22, wobei der Klebstoff im wesentlichen aus dem Polyurethan besteht.

25. Verbundene Baugruppe nach Anspruch 22, wobei der Klebstoff ferner mindestens eines aus einem Acrylsäure-, Epoxy-, Vinyl- oder einem zweiten Polyurethanpolymer umfaßt.

26. Verbundene Baugruppe nach Anspruch 22, wobei der Klebstoff ferner einen Vernetzer umfaßt.

27. Verbundene Baugruppe nach Anspruch 22, wobei das Substratpaar aus der Gruppe bestehend aus Polypropylenschaum/Polyvinylchlorid; Polyvinylfluorid/Phenolverbundstoff; Leder/Styrolbutadienkautschuk; PVC/Faserplatte; Papier/Papier; Polyvinylfluorid/Polyvinylchlorid; Polyvinylfluorid/Holz; Polyvinylfluorid/Holzverbundstoff; Polyvinylfluorid/wiederverwertetes Holz; Polyvinylfluorid/Papierprodukte; Polyethylenterephthalat/Polypropylen; Polyethylenterephthalat/Polyethylen; Polyethylenterephthalat/Metall und Weich-PVC/Weich-PVC ausgewählt ist.

28. Klebstofformulierung, hergestellt durch Vermischen einer Dispersion nach Anspruch 1 mit wenigstens einem aus einem Acrylsäure-. Epoxy-, Vinyl- oder einem zweiten Polyurethan-Polymer.

29. Verfahren zur Herstellung einer wäßrigen Dispersion eines anionischen Polyurethans. wobei das Polyurethan das Umsetzungsprodukt eines Isocyanat-terminierten Polyurethanprepolymers und von Wasser umfaßt, wobei das Verfahren umfaßt:
Herstellung eines Isocyanat-funktionalisierten Polyurethanprepolymers. wobei das Polyurethanprepolymer einen freien Isocyanatgehalt von 1 bis 5 Gew.-% aufweist und das Umsetzungsprodukt einer Polyolkomponente und einer Diisocyanatkomponente umfaßt, wobei die Polyolkomponente umfaßt:
ein sulfoniertes Polyesterpolyol, und
eine Hydroxycarbonsäure der Formel:
(HO)ₓR(COOH)_{y}
wobei (R) für geradkettiges oder verzweigtes Kohlenwasserstoffradikal mit 1 bis 12 Kohlenstoffatomen steht, und x und y für Werte von 1 bis 3 stehen,
und die Diisocyanatkomponente aus der Gruppe bestehend aus aromatischen Diisocyanaten, Isophorondiisocyanat, Hexamethylendiisocyanat und deren Mischungen ausgewählt ist;
Dispergieren des Prepolymers in einem wäßrigen Dispersionmedium, welches frei von primärem oder sekundärem Amin ist, bei einer Temperatur von mindestens 60°C über einen Zeitraum der ausreichend ist um zu ermöglichen, daß im wesentlichen alle Isocyanatgruppen in einer Umsetzung reagieren, in der sich der Prepolymer durch Reaktion mit Wasser selbst ausdehnt.

30. Verfahren nach Anspruch 29, in dem die Polyolkomponente ferner ein niedrigmolekulargewichtiges aliphatisches Diol mit einem Molekulargewicht von 60 bis 400 umfaßt.

31. Verfahren nach Anspruch 29, in dem die Polyolkomponente ferner ein nicht-sulfoniertes polymeres Polyol umfaßt.

32. Wasserbasierter sulfonierter Polyurethanklebstoff umfassend die wäßrige Dispersion eines anionischen Polyurethanpolymers nach Anspruch 1, gebildet in Gegenwart mindestens eines ethylenisch ungesättigten Monomers.

33. Zusammensetzung nach Anspruch 32, wobei das ethylenisch ungesättigte Monomer aus der Gruppe bestehend aus Methylmethacrylat, Butylacrylat und Mischungen davon ausgewählt ist.

34. Zusammensetzung nach Anspruch 33, wobei das ethylenisch ungesättigte Monomer nach der Bildung des sulfonierten Polyurethans frei-radikalisch polymerisiert wird, um ein wasserbasiertes sulfoniertes Polyurethan-/Acrylsäure-Netzwerk bildet, das sich gegenseitig durchdringt.

35. Zusammensetzung nach Anspruch 34, wobei die Zusammensetzung dadurch gekennzeichnet ist, daß sie eine Wärmeaktivierungstemperatur des getrockneten Films in einem Bereich von 50°C bis 95°C und wärmebeständige Verbindungen bis mehr als 110°C aufweist.

36. Zusammensetzung nach Anspruch 33, ferner umfassend wenigstens ein Wasser-dispergierbares polyfunktionales Vernetzungsmittel.

37. Zusammensetzung nach Anspruch 36, wobei das Vemetzungsmittel aus der Gruppe bestehend aus Isocyanaten, Aziridinen, Melaminharzen, Epoxiden, Oxazolinen, Carbodiimiden, Zinkammoniumcarbonat und Zirkoniumcarbonat ausgewählt ist.

38. Zusammensetzung nach Anspruch 37, wobei das Vernetzungsmittel in der Zusammensetzung in einer Menge von 1 Gewichtsteil bis 10 Gewichtsteilen vorliegt, bezogen auf 100 Teile der Zusammensetzung.

39. Zusammensetzung wie in Anspruch 33 beschrieben, ferner umfassend mindestens ein Wasser-dispergierbares Polymer oder Copolymer, das aus der Gruppe bestehend aus Acrylsäure-, Epoxy-, Vinylacetaten und Mischungen davon ausgewählt ist.

40. Fußbekleidungsartikel aufweisend einen Klebstoff, eine Beschichtung oder Grundierschicht auf wenigstens einem Teil davon, wobei die Schicht ein Polyurethanpolymer umfaßt, und dieses Polyurethanpolymer ein Umsetzungsprodukt ist von :
a) wenigstens einem Polyisocyanat;
b) wenigstens einem Alkylendiol mit einem Molekulargewichtsbereich von 60 bis 400;
c) wenigstens eines sulfonierten Polyesterpolyols, wobei die Sulfonsäuregruppen in Form von Alkalimetallsalzen vorliegen;
d) wenigstens einer Dihydroxycarbonsäure oder eines Salzes davon, das aus der Gruppe bestehend aus Alkalimetallsalzen, tertiäre organische Aminsalze und Mischungen davon ausgewählt ist; und
e) Wasser, das frei von primärem oder sekundärem Amin ist.

## Revendications

1. Dispersion aqueuse d'un polyuréthanne anionique, le polyuréthanne comprenant le produit de la réaction d'un prépolymère de polyuréthanne isocyanate terminal (« isocyanate terminated polyurethane prepolymer »), et de l'eau exempte d'amine primaire ou secondaire, le prépolymère de polyuréthanne comprenant le produit de réaction d'un composant de type polyol et d'un composant de type diisocyanate, le composant polyol comprenant :
un polyester polyol sulfoné (« sulfonated polyester polyol »),
un acide hydroxy carboxylique de formule :
(HO)ₓ R (COOH)_{y}
**caractérisé en ce que** (R) représente un radical hydrocarboné linéaire (« straight ») ou branché contenant 1 à 12 atomes de carbone, et x et y représentent des valeurs de 1 à 3, et comme composants optionnels
un diol aliphatique de bas poids moléculaire présentant une masse moléculaire de
60 à 400 et
un polyol polymérique non-sulfoné (« non-sulfonated polymeric polyol »),
et le composant diisocyanate sélectionné à partir du groupe consistant en les diisocyanates aromatiques, l'isophorone diisocyanate, l'hexaméthylène diisocyanate et des mélanges de ceux-ci.

2. Dispersion selon la revendication 1 **caractérisée en ce que** le diol aliphatique de bas poids moléculaire est présent et est un alkyléne diol en C₂-C₈.

3. Dispersion selon la revendication 2 **caractérisée en ce que** le diol aliphatique de bas poids moléculaire est l'éthylène glycol, le 1,3-propylène glycol, le 1,4-butanediol ou le 1,6-hexanediol.

4. Dispersion selon la revendication 1 **caractérisée en ce que** le polyester polyol sulfoné est un polyester hydroxy terminal formé à partir de résidus d'au moins un diacide carboxylique, au moins un diol et au moins un sulfonate de diacide (« sulfonate diacid ») ou un sulfonate de diol (« sulfonate diol »).

5. Dispersion selon la revendication 4 **caractérisée en ce que** le résidu diacide carboxylique du polyester polyol sulfoné comprend le résidu d'un diacide sélectionné à partir du groupe consistant en les acides adipique, azélaique, succinique, subérique et phtalique.

6. Dispersion selon la revendication 4 **caractérisée en ce que** le résidu diol du polyester polyol sulfoné comprend le résidu d'un diol sélectionné à partir du groupe consistant en l'éthylène glycol, des condensats («condensates») d'éthylène glycol, du butanediol, du butènediol, du propanediol, du néopentyl glycol, de l'hexanediol, du 1,4-cyclohexane diméthanol, du 1,2-propylène glycol et du 2-méthyl-1,3-propanediol.

7. Dispersion selon la revendication 4 **caractérisée en ce que** le résidu de sulfonate de diacide ou le résidu de sulfonate de diol comprend le résidu d'au moins un membre du groupe consistant en les acides sulfoisophthalique, sulfosuccinique, 1,4-dihydroxybutane sulfonique et le bisulfite de disodium succinaldéhyde (« succinaldehyde disodium bisulfite »).

8. Dispersion selon la revendication 1 **caractérisée en ce que** le polyester polyol sulfoné est basé sur le sel monosodé de l'acide 5-sulfoisophthalique, le 1,6-hexanediol et l'acide adipique.

9. Dispersion selon la revendication 1 **caractérisée en ce que** le polyester polyol sulfoné présente un poids moléculaire moyen de l'ordre de 500 à 10.000 et une température de fusion de l'ordre de 10 à 100°C.

10. Dispersion selon la revendication 9 **caractérisée en ce que** le poids moléculaire moyen est de l'ordre de 1000 à 4000 et la température de fusion de 40 à 60°C.

11. Dispersion selon la revendication 1 **caractérisée en ce que** l'acide hydroxy carboxylique est un acide α,α-diméthylol alkanoïque représenté par la formule : 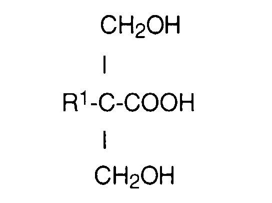 dans laquelle R¹ représente un groupe hydrogène ou alkyle avec jusqu'à 9 atomes de carbone.

12. Dispersion selon la revendication 11 **caractérisée en ce que** l'acide α,α-diméthylol alkanoique est sélectionné à partir du groupe consistant en les acides 2,2-diméthylolacétique, 2,2-diméthylolpropionique, 2,2-diméthylolbutyrique, 2,2-diméthylol-pentanique et des mélanges de ceux-ci.

13. Dispersion selon la revendication 12 **caractérisée en ce que** l'acide α,α-diméthylol alkanoïque est l'acide 2,2-diméthylolpropionique.

14. Dispersion selon la revendication 1 **caractérisée en ce que** le composant polyol comprend ledit polyol polymérique non-sulfoné, ledit polyol polymérique non-sulfoné étant sélectionné à partir du groupe consistant en les polyesters polyols non-sulfonés, les polyéthers polyols non-sulfonés et des mélanges de ceux-ci.

15. Dispersion selon la revendication 1 **caractérisée en ce que** les polyols dans ledit composant polyol sont employés dans les rapports suivants de polyester polyol sulfoné / l'acide hydroxy carboxylique / le diol de bas poids moléculaire / le polyol non-sulfoné : 10-50/0,5-5/0,1-2/0-20.

16. Dispersion selon la revendication 15 **caractérisée en ce que** les polyols dans ledit composant polyol sont employés dans les rapports relatifs suivants de polyester polyol sulfoné / l'acide hydroxy carboxylique / le diol de bas poids moléculaire / le polyol non-sulfoné : 20-40/1-3/0,5-1 ,5/0-10.

17. Dispersion selon la revendication 1 **caractérisée en ce que** le prépolymère de polyuréthanne est le produit de la réaction dans lequel ledit composant polyol et le composant diisocyanate sont mis à réagir dans un rapport de groupes NCO sur les groupes OH de 1,1 à 1,9:1.

18. Dispersion selon la revendication 17 **caractérisée en ce que** le prépolymère de polyuréthanne est le produit de la réaction dans lequel ledit composant polyol et le composant diisocyanate sont mis à réagir avec un rapport de groupes NCO sur les groupes OH de 1,2 à 1,6:1.

19. Formulation adhésive préparée en mélangeant une dispersion selon la revendication 1 avec un agent de réticulation réagissant à l'acide (« acid reactive crosslinking agent »).

20. Formulation adhésive selon la revendication 19 **caractérisée en ce que** l'agent de réticulation est sélectionné à partir du groupe consistant en les aziridines polyfonctionnelles, les carbonates d'ammonium de zinc (« zinc ammonium carbonate ») et le carbonate de zircone (« zirconium carbonate »).

21. Formulation adhésive préparée en mélangeant une dispersion selon la revendication 1 avec un agent de réticulation de type polyisocianate.

22. Assemblage lié d'une paire de substrats, l'assemblage étant lié avec un adhésif comprenant une dispersion séchée selon la revendication 1.

23. Assemblage lié selon la revendication 22 **caractérisé en ce que** la paire de substrats comprend un membre fabriqué d'un matériel sélectionné à partir du groupe consistant en le polypropylène, le chlorure de polyvinyle, des composites phénoliques, du cuir, du caoutchouc de styrène-butadiène, un plateau de fibres, du papier, du fluorure de polyvinyle, du bois, du composite de bois, du bois recyclé, du térephthalate de polyéthylène, du polyéthylène, et du métal.

24. Assemblage lié selon la revendication 22 **caractérisé en ce que** ledit adhésif consiste essentiellement en ledit polyuréthanne.

25. Assemblage lié selon la revendication 22 **caractérisé en ce que** ledit adhésif comprend en outre au moins un polymère d'acrylique, d'époxy, de vinyle ou un second polymère de polyuréthanne.

26. Assemblage lié selon la revendication 22 **caractérisé en ce que** ledit adhésif comprend en outre un agent de réticulation.

27. Assemblage lié selon la revendication 22 **caractérisé en ce que** ladite paire de substrats est sélectionnée à partir du groupe consistant en de la mousse de polypropylène / du polychlorure de vinyle ; du fluorure de polyvinyle / des composites phénoliques ; du cuir / un caoutchouc de styrène-butadiène du PVC / un plateau de fibres (« fiberboard ») ; du papier / du papier ; du fluorure de polyvinyle / du chlorure de polyvinyle ; du fluorure de polyvinyle / du bois ; du fluorure de polyvinyle / du composite de bois ; du fluorure de polyvinyle / du bois recyclé ; du fluorure de polyvinyle / des produits en papier ; du térephthalate de polyéthylène / du polypropylène du térephthalate de polyéthylène / du polyéthylène du térephthalate de polyéthylène / du métal et du chlorure de polyvinyle plastifié / du chlorure de polyvinyle plastifié.

28. Formulation adhésive préparée en mélangeant une dispersion selon la revendication 1 avec au moins un polymère d'acrylique, d'époxy, de vinyle, ou un second polymère de polyuréthanne.

29. Procédé pour la formation d'une dispersion aqueuse d'un polyuréthanne anionique, le polyuréthanne comprenant les produits de la réaction d'un prépolymère de polyuréthanne isocyanate terminal, et de l'eau, le procédé comprenant :
la préparation d'un prépolymère de polyuréthanne isocyanate fonctionnel (« isocyanate functional polyurethane prepolymer »), le prépolymère de polyuréthane présentant un contenu libre en isocyanate de 1 à 5 % en poids et comprenant le produit de la réaction d'un composant de type polyol et d'un composant de type diisocyanate, le composant polyol comprenant :
un polyester polyol sulfoné, et
un acide hydroxy carboxylique de formule :
(HO)ₓ R (COOH)_{y}
**caractérisé en ce que** (R) représente un radical hydrocarboné linéaire ou branché contenant 1 à 12 atomes de carbone, et x et y représentent des valeurs de 1 à 3, et le composant diisocyanate est sélectionné à partir du groupe consistant en des diisocyanates aromatiques, de l'isophorone de diisocyanate, de l'hexaméthylène diisocyanate et des mélanges de ceux-ci ;
la dispersion du prépolymère dans un milieu dispersant aqueux exempt d'amine primaire ou secondaire à une température d'au moins 60° pour une durée suffisante afin de permettre la réaction de substantiellement tous les groupes isocyanates dans une réaction dans laquelle le prépolymère est auto-prolongé par réaction avec l'eau.

30. Procédé selon la revendication 29 **caractérisé en ce que** le composant polyol comprend en outre un diol aliphatique de bas poids moléculaire présentant un poids moléculaire de 60 à 400.

31. Procédé selon la revendication 29 **caractérisé en ce que** le composant polyol comprend en outre un polyol polymérique non-sulfoné.

32. Adhésif de type polyuréthanne sulfoné à base d'eau comprenant la dispersion aqueuse d'un polymère de polyuréthanne anionique selon la revendication 1 formé en présence d'au moins un monomère éthyléniquement insaturé.

33. Composition selon la revendication 32 **caractérisée en ce que** le monomère éthyléniquement insaturé est sélectionné à partir du groupe consistant en le méthacrylate de méthyle, l'acrylate de butyle et un mélange de ceux-ci.

34. Composition selon la revendication 33 **caractérisée en ce que** le monomère éthyléniquement insaturé est polymérisé dans une réaction de type radicaux libres (« free radically polymerized ») après la formation dudit polyuréthanne sulfoné afin de former un réseau de polyuréthanne sulfoné à base d'eau / acrylique qui interpénètre (« water-based sulfonated polyuréthanne/acrylic).

35. Composition selon la revendication 34 **caractérisée en ce que** ladite composition présente une température d'activation de film sec de l'ordre de 50°C à 95°C et des liens résistant à une chaleur supérieure à 110°C.

36. Composition selon la revendication 33 comprenant en outre au moins un agent de réticulation polyfonctionnel dispersible à l'eau.

37. Composition selon la revendication 36 **caractérisée en ce que** ledit agent de réticulation est sélectionné à partir du groupe consistant en les isocyanates, les aziridines, les résines de mélamine, les époxy, les oxazolines, les carbodiimides, les carbonates d'ammonium de zinc, et les carbonates de zircone.

38. Composition selon la revendication 37 **caractérisée en ce que** l'agent de réticulation est présent dans la composition à une quantité de 1 partie à 10 parties en poids sur 100 parties de ladite composition.

39. Composition selon la revendication 33 comprenant en outre au moins un polymère ou copolymère dispersible à l'eau, sélectionné à partir du groupe consistant en les acryliques, les époxy, les acétates de vinyle et des mélanges de ceux-ci.

40. Article de chaussure présentant sur au moins une partie un adhésif, un revêtement ou une amorce de couche (« primer layer »), ladite couche comprenant un polymère de polyuréthanne, ledit polymère de polyuréthanne étant le produit de réaction de
a) au moins un polyisocyanate ;
b) au moins un alkylène diol présentant un poids moléculaire de l'ordre de 60 à 400 ;
c) au moins un polyester polyol sulfonaté **caractérisé en ce que** les groupes sulfo sont présents sous forme de sels de métaux alcalins (« alkali metal salts ») ;
d) au moins un acide dihydroxy carboxylique, ou un de ses sels sélectionné à partir du groupe consistant en les sels de métaux alcalins, les sels d'amine tertiaire organique et des mélanges de ceux-ci ; et
e) de l'eau exempte d'amine primaire ou secondaire.
